# EUROPEAN PATENT APPLICATION

(11) **EP 3 534 617 A1**
(43) Date of publication of application: **04.09.2019**
(21) Application number: 18159289.0
(22) Date of filing: 28.02.2018
(51) Int. Cl.: H04N 21/433, H04N 21/4147, H04N 21/426, H04N 21/434, H04N 21/835, G11B 27/10

(54) **METHOD, DEVICE AND COMPUTER PROGRAM FOR RECORDING DIGITAL TRANSPORT STREAM PACKETS**

(71) Applicant: Vestel Elektronik Sanayi ve Ticaret A.S., 45030 Manisa (TR)
(72) Inventor: DOGAN,, Murat, 45030 Manisa (TR)
(74) Representative: Flint, Adam

(57) **Abstract**

During the recording of digital transport stream packets (TSP), at least one of a timestamp (T) for each transmitted transport stream packet (TSP) and a padding element (P) for each transmitted transport stream packet (TSP) is added. The timestamp (T) specifies the record duration so far. The padding element (P) for each recorded transport stream packet (TSP) is the same or the numerical value of the padding elements (P) for the respective recorded transport stream packets (TSP) increase in sequence as the recorded transport stream packets (TSP) are recorded.

## Description

### Technical Field

The present disclosure relates to a method, device and computer program for recording digital transport stream packets.

### Background

Digital data for media content, such as a televisions program or movie or the like that is transmitted, may be recorded by users, to enable the content to be played back at a more convenient time. However, current methods for recording the media content have a number of drawbacks or shortcomings.

### Summary

According to a first aspect disclosed herein, there is provided a method of recording digital transport stream packets of a transmitted transport stream, which is formed of digital transport stream packets received at a recording device, to form a recorded transport stream, the method comprising:
during the recording of the digital transport stream packets, adding a timestamp for each transmitted transport stream packet, the timestamp specifying the record duration so far, such that the recorded transport stream is formed of recorded transport stream packets and record duration timestamps for each recorded transport stream packet.

Each recorded transport stream packet and its associated record duration timestamp are preferably recorded in sequence, such that, in effect, the record duration timestamp is appended (or pre-pended) to its associated transport stream packet in the recorded transport stream.

In an example, the number of bits for each record duration timestamp is fixed.

That is, each record duration timestamp in the recorded transport stream is the same size. In a specific example, each record duration timestamp may be 32 bits (4 bytes).

In an example, the number of bits for each record duration timestamp and the clock speed for determining the record duration during recording are such as to provide a total record duration in excess of 30 minutes.

As a specific example that is of practical use and that is sufficiently precise for most purposes, the number of bits for each record duration timestamp is 32 and the clock speed for determining the record duration is less than around 2.4 MHz; this enables a recording of around 30 minutes to be made in which the correct total duration can be indicated. As another specific example, the number of bits for each record duration timestamp is 32 and the clock speed for determining the record duration is around 100 KHz; this enables a recording of around 12 hours to be made.

In an example, the method comprises:
during the recording of the digital transport stream packets, adding a padding element for each transmitted transport stream packet, such that the recorded transport stream is formed of recorded transport stream packets, record duration timestamps for each recorded transport stream packet, and padding elements for each transmitted transport stream packet.

Each recorded transport stream packet and its associated padding element are preferably recorded in sequence, such that, in effect, the padding element is appended (or pre-pended) to its associated transport stream packet in the recorded transport stream.

In an example, the number of bits for each padding element is fixed.

That is, each padding element in the recorded transport stream is the same size. In a specific example, each padding element may be 32 bits (4 bytes).

In an example, the padding element for each recorded transport stream packet is the same.

In an example, the padding element is an identifier of the recording device.

In an example, the transport stream packets are encrypted during the recording by the recording device, the encryption using a public-private key pair of the recording device in which the identifier of the recording device is the public key of the recording device.

This may be used for example to enforce licence restrictions or "DRM" (digital rights management), such that for example the recorded content can only be played back on the device that made the recording.

In an example, the numerical value of the padding elements for the respective recorded transport stream packets increase in sequence as the recorded transport stream packets are recorded.

This may be used for example to check during play back that the recorded file is complete and has not been corrupted.

According to a second aspect disclosed herein, there is provided a method of recording digital transport stream packets of a transmitted transport stream, which is formed of digital transport stream packets received at a recording device, to form a recorded transport stream, the method comprising:
during the recording of the digital transport stream packets, adding a padding element for each transmitted transport stream packet, such that the recorded transport stream is formed of recorded transport stream packets and padding elements for each transmitted transport stream packet; wherein:
   the padding element for each recorded transport stream packet is the same, or
   the numerical value of the padding elements for the respective recorded transport stream packets increase in sequence as the recorded transport stream packets are recorded.

In an example in the case that the padding element for each recorded transport stream packet is the same, the padding element is an identifier of the recording device. In an example, the transport stream packets are encrypted during the recording by the recording device, the encryption using a public-private key pair of the recording device in which the identifier of the recording device is the public key of the recording device.

According to a third aspect disclosed herein, there is provided a method of using a recorded transport stream formed as described above, the method comprising providing an indication of the total duration of the recorded transport stream by inspecting the last record duration timestamp in the recorded transport stream and providing an indication of the total duration of the recorded transport stream on the basis of the last record duration timestamp in the recorded transport stream.

According to a fourth aspect disclosed herein, there is provided a method of using a recorded transport stream formed as described above, the method comprising inspecting the record duration timestamps in the recorded transport stream to at least one of (i) identify the current playback position and (ii) locate a specific playback position during fast forwarding and/or fast rewind of the recorded transport stream.

According to a fifth aspect disclosed herein, there is provided a method of using a recorded transport stream formed as described above, the method comprising inspecting the record duration timestamps in the recorded transport stream and determining that the recorded transport stream is corrupt if the value of any successive timestamp is less than for any previous timestamp.

According to a sixth aspect disclosed herein, there is provided a method of using a recorded transport stream formed as described above, the method comprising inspecting at least one of the padding elements to obtain the identifier of the recording device on which the transport stream was recorded.

According to a seventh aspect disclosed herein, there is provided a method of using a recorded transport stream formed as described above when the numerical value of the padding elements for the respective recorded transport stream packets increase in sequence as the recorded transport stream packets are recorded, the method comprising inspecting the padding elements in the recorded transport stream and determining that the recorded transport stream is corrupt if the value of any successive padding element is less than for any previous padding element.

According to an eighth aspect disclosed herein, there is provided a device for recording digital transport stream packets of a transmitted transport stream, the device being constructed and arranged to carry out a method as described above.

The device may comprise a processing system constructed and arranged to carry out the method. The processing system may comprise at least one processor and at least one memory including computer program instructions, the at least one memory and the computer program instructions being configured, with the at least one processor, to cause the device to carry out the method.

According to a ninth aspect disclosed herein, there is provided a computer program comprising instructions such that when the computer program is executed on a computing device, the computing device is arranged to carry out a method as described above.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically a known transport stream made up of plural transport stream packets each having a header portion and a payload portion;
Figure 2 shows schematically an example of a recorded transport stream in accordance with aspects of the present disclosure; and
Figure 3 shows schematically an example of a recording device and a removable data storage.

### Detailed Description

In digital broadcasting of video and/or audio, the data packets that make up the video and/or audio are transmitted from a transmitter to a receiver over a medium such as satellite, cable, "terrestrial", mobile ("cellular") or over the Internet. Data packets for related data, such as EPG ("electronic program guide") data, subtitles or "closed caption", etc. may also be transmitted. The data packets are typically transmitted in a stream of packets from the transmitter to the receiver.

Each data packet typically has a payload portion, which contains the video or audio or other data, and a header portion. The header portion may have a "sync" portion which is a known sequence of data used to identify the end of the header and the start of the payload portion. The header portion may also have one or more other parts that have various purposes, including for example a part that identifies the priority of the data packet, a packet identifier which identifies the stream in which the packet is being transmitted, etc.

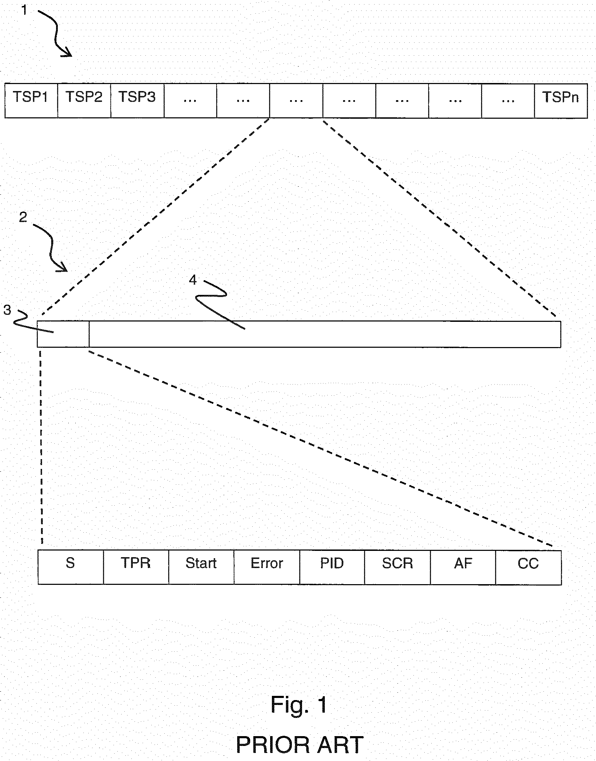

A specific example for the case of MPEG-2 is shown schematically in Figure 1. Whilst the following description is specifically in relation to MPEG-2, the same or similar basic concepts may be used in other formats for transmission of digital data.

The upper part of Figure 1 shows a transport stream 1 which is made up of plural transport stream packets TSP1... TSPn. The central portion of Figure 1 shows a more detailed view of a transport stream packet 2, and in particular illustrates a header portion 3 and a payload portion 4 of the transport stream packet 2. The lower part of Figure 1 shows the header portion 3 of a transport stream packet 2 in more detail. The header portion 3 is shown as having fields for sync S, transport priority TPR, payload Start, Error indicator, packet identifier PID, scrambling control SCR, adaptation field AF, and continuity check CC. The purpose and function of these various fields is well known and defined in for example the MPEG-2 Standard. It may be noted that the packet identifier PID identifies the transport stream in which the packet is located.

In the jargon of MPEG-2, there is "elementary data", which is only one kind of data (e.g. video data which is output by a video encoder, or audio data which is output by an audio encoder, or other data such as subtitles or "closed caption"). The elementary data is packetized by encapsulating sequential data bytes from the respective elementary streams inside packetized elementary stream (PES) packet headers. The PES packets are then encapsulated inside transport stream packets. The transport stream packets can then be multiplexed and transmitted using broadcasting techniques, such as those used in as DVB (Digital Video Broadcasting), ATSC (Advanced Television Systems Committee) and IPTV (Internet Protocol television). In the multiplexing to form the transport streams, video, audio and program and/or system information for a particular television programme or move or other content that is being broadcast may be brought together, and indeed data for plural programmes may be multiplexed.

In short to summarise briefly, in MPEG-2 or similar, a transport stream TS is in essence simply made up of a sequence of plural packets, namely the transport stream packets (TS packets). A typical method of transmitting elementary stream data from a video or audio encoder is to first create PES (packetized elementary stream) packets from the elementary stream data and then to encapsulate these PES packets inside TS packets. The TS packets can then be multiplexed and transmitted using broadcasting techniques, such as those used in an ATSC and DVB. A transport stream TS does not have a global header or the like.

TS packets as used in MPEG-2 are conventionally normally 188 bytes in length (though the communication medium may add additional information such as for error correction).

A transport stream needs timing information to make sure that the video and audio (and optionally subtitles) are synchronised with each other by the decoder of the receiving device which receives the broadcast or streamed transport stream and played back at the correct time such that that video and audio (and optionally subtitles) are synchronised with each other. In MPEG-2, a number of timecodes are available, including in particular PCR or Programme Clock Reference, PTS or Presentation Time Stamp, and DTS or Decode Time Stamp.

The Programme Clock Reference (PCR) is a reference clock which the decoder can use to keep track of all timing information and to keep the different streams of a particular programme synchronised with each other. If the PTS or DTS timestamps (see below) are corrupted for some reason, the decoder of the receiving device can use the PCR to recreate the corrupted timestamps.

The Presentation Time Stamp (PTS) tells the decoder of the receiving device when to display or present a frame in the stream. The PTS is present for elementary streams such as video, audio and subtitles. In particular, the PTS is a timestamp metadata field in an MPEG transport stream that is used to achieve synchronisation of programmes' separate elementary streams (for example video, audio and subtitles) when presented to the viewer. The PTS is given in units related to a programme's overall clock reference, such as the Program Clock Reference (PCR), which is also transmitted in the transport stream or program stream.

The DTS tells the decoder when to decode a frame in the stream. The DTS is also present for elementary streams such as video, audio and subtitles. The DTS is slightly ahead of the PTS in time so as to allow the decoder of the receiving device time to decode the frame before the decoder needs to present it.

In summary of the above, timestamps are present in the transport stream which is transmitted from a transmitter to a receiver over a medium such as satellite, cable, "terrestrial", mobile ("cellular") or over the Internet. The timestamps are used in the receiver so as to coordinate and synchronise the play back in real time of the video, audio and optionally data such as subtitles that is present in the broadcast content. Importantly for present purposes, none of these timestamps in the transmitted transport stream is useful in recorded content for the desired objective(s) of examples of the present disclosure.

In examples of a first aspect described herein, a timestamp is added for each transmitted transport stream packet during the recording of the digital transport stream packets, the timestamp specifying the record duration so far, such that the recorded transport stream is formed of recorded transport stream packets and record duration timestamps for each recorded transport stream packet. In examples of a second aspect described herein, a padding element is added for each transmitted transport stream packet during the recording of the digital transport stream packets, such that the recorded transport stream is formed of recorded transport stream packets and padding elements for each transmitted transport stream packet; wherein: the padding element for each recorded transport stream packet is the same, or the numerical value of the padding elements for the respective recorded transport stream packets increase in sequence as the recorded transport stream packets are recorded. In some examples, both record duration timestamps and padding elements are added for each transmitted transport stream packet during the recording of the digital transport stream packets.

Examples described herein may be used in for example a PVR (personal video recorder, also known as a DVR or digital video recorder). The PVR may for example record the content in a digital format to for example a hard disk drive, USB (Universal Serial Bus) flash drive or memory stick, SD ("Secure Digital") memory card, SSD (solid state drive) or other local or networked mass storage device. The PVR may be a stand-alone device or may be incorporated in or be part of a consumer electronics device, such as for example a media device such as a television set, a display screen or panel, a set top box, a DVD player, a Blu Ray player, a personal computing device such as a laptop or desktop or tablet computer, a video game console, a cellular phone (including a so-called "smart phone"), a media player, etc. The PVR may be implemented in software on a computing device.

It is mentioned here that the discussion of timestamps and the like in the introduction above relate to timestamps that are present in the transport stream that is transmitted from a transmitter to a receiver over a medium such as satellite, cable, "terrestrial", mobile ("cellular") or over the Internet. In particular, the transport stream was originally designed for broadcast. Subsequently, the transport stream was adapted for use with digital video cameras and other recorders by adding a 4-byte extra header to the standard 188-byte TS packets, which resulted in a 192-byte packet. (This is sometimes called a m2ts stream which is used in accordance with the Blu-ray Disc Audio-Video (BDAV) MPEG-2 Transport Stream (m2ts) container file format, that is, for Blu-ray recordings.) The extra 4-byte header that is added in m2ts to the original 188-byte TS packets for recording purposes consists of a 2-bit copy permission indicator and a 30-bit arrival timestamp with a resolution of 27 MHz (i.e. the arrival time counter runs with a clock speed of 27 MHz). Notably, the 30-bit arrival timestamp with a resolution of 27 MHz as used in m2ts means that this timestamp rolls over every 40 seconds (that is, 2³⁰/27,000,000 = 40 seconds approximately). This means that not only do these arrival timestamps have a different purpose from the record duration timestamps that are used in some examples of the present disclosure, it also means that these arrival timestamps do not provide the functionality of the record duration timestamps that are used in some examples of the present disclosure.

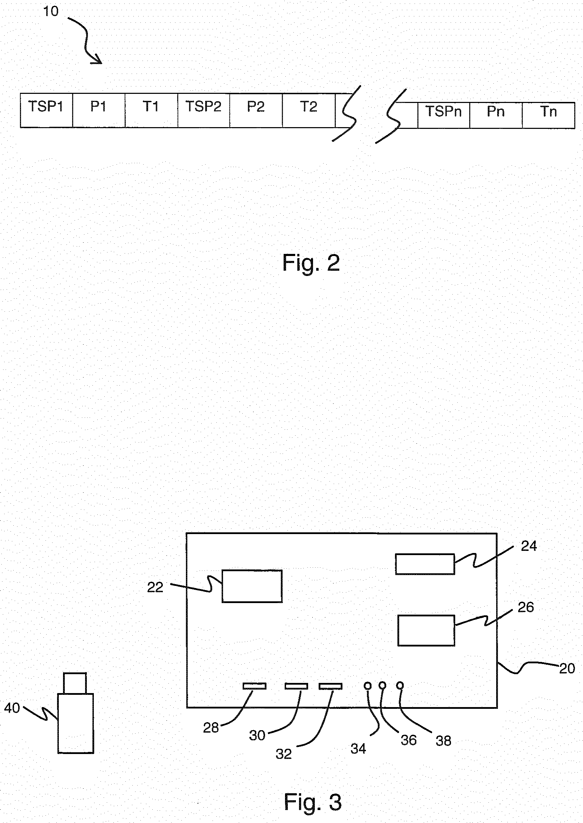

Referring now to Figure 2, this shows schematically a transport stream which has been recorded in accordance with examples described herein. It may be noted that in this example, the recorded transport stream is formed of recorded transport stream packets, record duration timestamps for each recorded transport stream packet, and padding elements for each transmitted transport stream packet. In other examples, the recorded transport stream is formed of recorded transport stream packets and record duration timestamps for each recorded transport stream packet (but no padding elements as described herein); in other examples, the recorded transport stream is formed of recorded transport stream packets and padding elements for each transmitted transport stream packet (but no record duration timestamps as described herein). However, having both padding elements and record duration timestamps as described herein has particular advantages, as will become clear.

The recorded transport stream 10 has plural transport stream packets TSP1, TSP2,... TSPn. These are the transport stream packets of the transport stream that was broadcast or otherwise received by the recording device and therefore include the same header portion and data payload portion (see Figure 1 and the related description above).

For each of the transport stream packets TSP1, TSP2,... TSPn, the recorded transport stream 10 has a padding element P1, P2,... Pn. In addition, for each of the transport stream packets TSP1, TSP2,... TSPn, the recorded transport stream 10 has a timestamp T1, T2,... Tn. In the example shown, each transport stream packet TSP is followed by its padding element P and its timestamp T, which are then followed by the next transport stream packet TSP its padding element P and its timestamp T and so on. In other examples, the order of the transport stream packet TSP, its padding element P and its timestamp T may be different. It is preferred however that a transport stream packet TSP, its padding element P and its timestamp T are grouped together, to be followed by the next transport stream packet TSP, its padding element P and its timestamp T, and so on.

Discussing first the timestamps T which are added in an example during recording of the transport stream by the recording device which has received the transmitted transport stream, in an example these timestamps T specify the duration of the recording so far. That is, the timestamp T for a transport stream packet TSP specifies the position in time of the transport stream packet TSP in the recorded transport packet stream where the "time" is the current time relative to the time of the first transport stream packet TSP that was recorded and, moreover, the "time" relates to the time of the content rather than for example some absolute or "real" time when the transport stream packet TSP happens to have been recorded by the recording device. So, for example, a timestamp P for a transport stream packet TSP may indicate "23 seconds", which indicates that that transport stream packet TSP has video, audio or other data that appears 23 seconds into the recorded content when the content is played back.

A first advantage of providing record duration timestamps (and not just presentation timestamps or decode timestamps in transmitted transport streams, or even arrival timestamps used in some recordings, as discussed above) is that the playback device (which may be the same device as the recording device or may be a different device) can quickly provide the user with an indication of the total duration of the particular recording that has been made. In particular, if for example a user calls up a menu or list or the like that shows the recordings that have been made and saved, the playback device that plays back the recordings does not need to decode all or a large number of the recorded transport stream packets in order to determine the duration of the particular recording that has been made. On the contrary, the playback device only needs to inspect the last record duration timestamp (Tn above) in the relevant recorded transport stream 10 to know the total record duration of that recorded transport stream 10.

To facilitate this, the number of bits for each record duration timestamp and the clock speed for determining or "clocking" the record duration during recording may be such as to provide a total record duration that is suitable for a wide range of content. As a specific example that is of practical use and that is sufficiently precise for most purposes, the number of bits for each record duration timestamp is 32 (i.e. the record duration timestamps are each 4 bytes) and the clock speed for determining the record duration is less than around 2.4 MHz; this enables a recording of around 30 minutes to be made in which the correct total duration can be indicated. (In essence, the time = bits / clock speed.) As another specific example, each record duration timestamp is 32 bits (4 bytes) and the clock speed for determining the record duration is around 100 KHz; this enables a recording of around 12 hours to be made in which the correct total duration can be indicated. Other variations, with different numbers of bits for the record duration timestamps and different clock speeds, will be apparent.

Another advantage of providing record duration timestamps is that the playback device (which may be the same device as the recording device or may be a different device) can quickly provide the user with an indication of the current playback position (in time). Related to this, another advantage is that the playback device can quickly access a specific playback position (in time). Similarly to the above, the playback device does not need to decode all or a large number of the recorded transport stream packets in order to locate as specific position in time in the recording that has been made. On the contrary, the playback device only needs to inspect the record duration timestamps to locate a specific playback position (in time). This is particularly useful as it enables a user to quickly locate a specific playback position, and also facilitates fast forwarding and fast rewind of the recorded content.

The record duration timestamps can also be used to check for corruption of the recorded transport stream. In particular, the timestamps T1, T2,... Tn in the recorded transport stream should be sequential, i.e. T1 < T2 < .... < Tk < .... < Tn as they represent the position in (record duration) time of the corresponding transport stream packet TSP. The recording device or playback device can therefore inspect the timestamps T1, T2,... Tn in turn, and, if the value of any successive timestamp Tk is less than for any previous timestamp Tk-1, Tk-2, ..., then it can determine that the recorded transport stream file is not correct and has been corrupted somehow.

Similarly, for any recorded transport stream packet, the value of the difference between adjacent timestamps Tk - Tk-1 must be smaller than a predefined application-specific logical time limit (Tmax), which will depend on the size in bits of the timestamp and the clock speed that is used for the timestamps. If this check fails for any Tk, then the recorded transport stream file is assumed to be corrupted.

In either case if a check fails for any timestamp Tk, then the corresponding transport stream packet TSPk and all the following transport stream packets (TSPk+1, TSPk+2, ..., TSPn) may be discarded.

Discussing now the padding elements P which in an example are added during recording of the transport stream by the recording device which has received the transmitted transport stream, these can have various forms depending on the intended usage and purpose.

As a first example, the number of bits for each padding element P is fixed. That is, each padding element P in the recorded transport stream is the same size. In a specific example, each padding element P may be 32 bits (4 bytes).

One use of padding elements P that are the same size is to enable checking for corruption of the recorded transport stream. In particular, where the transport stream packets TSP all have the same size (e.g. as in MPEG-2 as discussed above, where the standard packet size if 188 bytes), then the recording device or playback device can check that the size of the recorded transport stream is some integer multiple of the total of the transport stream packet size and the padding element size. In the case that record duration timestamps are also used as described above and these are of fixed size also, this check can be that the size of the recorded transport stream is some integer multiple of the total of the transport stream packet size, the padding element size and record duration timestamp size. The size of the recorded transport stream may be monitored more or less continuously as the transport stream is recorded, with a check on the size being made each time a transport stream packet and associated padding element and record duration timestamp are recorded, or at least every time some number of transport stream packets and associated padding elements and record duration timestamps are recorded. Alternatively or additionally, the total size of the recorded transport stream may be checked once the whole file has been recorded to check that the total size is some integer multiple of total of the transport stream packet size, the padding element size and record duration timestamp size.

That is, in a specific example where the size of the recorded transport stream is monitored more or less continuously as the transport stream is recorded, if the record operation has written exactly K live transport stream packets of 188 bytes each to the recorded transport stream file and the padding elements are P bytes and the record duration timestamps are T bytes, then the size S of the recorded transport stream file must be exactly K * (188 + P + T) bytes, and the remainder Smod(TSP + P + T) must be zero. If a non-zero remainder Smod(TSP + P + T) is obtained, then the recorded transport stream file is assumed to be corrupted. In such a case, in an example the recorded transport stream file is shortened (S is shortened to Snew that is S - (Smod(TSP + P + T)) by discarding the remaining and probably corrupted bytes at the end of the file following the Kth transport stream packet TSPk.

As another example of use of the padding elements P, the padding element may be an identifier of the recording device. This may be useful to enforce licence conditions on the received content that apply to the user. For example, the user may be permitted to record the content only on a specific device or play back the content only on a specific device. The playback device can read the padding elements to ensure that they identify the correct, permitted device, and only play back the content if so. As a particular example, all transport stream packets, from the end to the beginning of the recorded transport stream file, could be analysed for the validity of the value of the padding elements P, wherein all transport stream packets for which the value of the padding element P is not equal to the predefined product identifier could be discarded.

In a specific example of use of the padding elements P as an identifier of the recording device, the transport stream packets TSP may be encrypted during the recording by the recording device. The encryption may use a public-private key pair of the recording device in which the identifier of the recording device, which is used at the padding elements which are added during the recording, is the public key of the recording device.

As another example of use of the padding elements P, the padding element P may be a counter that specifies a transport stream packet number for each transport stream packet TSP. That is, the value of the padding elements P for the transport stream packets TSP increases monotonically and preferably sequentially as the transport stream packets TSP are recorded. According to this example, if the counters that are implemented by the padding elements P of a transport stream are found to be non-sequential, then it is determined that the recorded transport stream file is not correct and has been corrupted somehow. In such a case, the non-sequential packets may be discarded. That is, if a check fails for any padding element Pk, then the corresponding transport stream packet TSPk and all the following transport stream packets (TSPk+1, TSPk+2, ..., TSPn) may be discarded.

In any example where transport stream packets are discarded (such as when transport stream packets (TSPk+1, TSPk+2, ..., TSPn) that follow a Kth transport stream packet where a corruption has been identified are discarded), the recorded transport stream file may be permanently truncated by discarding the corrupted data bytes / transport stream packets (TSPk+1, TSPk+2, ..., TSPn) at the end of the file so that the same "sanity check" or file corruption check is not applied whenever playback is initiated.

Examples described herein are particularly useful where the recording device may be subject to power loss or outage during recording. Examples described herein are particularly useful where the recording device is recording the transport stream file to a removable storage medium, such as for example a USB flash drive or memory stick, as users may inadvertently or unknowingly remove the removable storage medium from the recording device during the recording process. Examples described herein enable corruption of the recorded transport stream file to be detected during playback. This enables the user to be alerted and, in the case that the playback device can modify the recorded file, enables the recorded transport stream file to be amended to remove corrupted data.

Figure 3 shows schematically a recording device 20, which in some examples may also be a playback device. The device 20 may be for example a stand-alone PVR device or may be incorporated in or be part of a consumer electronics device, such as for example a media device such as a television set, a display screen or panel, a set top box, a DVD player, a Blu Ray player, a personal computing device such as a laptop or desktop or tablet computer, a video game console, a cellular phone (including a so-called "smart phone"), a media player, etc. The PVR may be implemented in software on a computing device.

The recording device 20 has a processor 22, volatile memory 24 for execution of software, and non-volatile storage 26 for permanent storage of data, software, etc. The recording device 20 has one or more input and output terminals 28 to 38, for connecting the recording device 20 to receive broadcast signals (over one or more of satellite, cable, "terrestrial", mobile ("cellular") and the Internet), to an associated playback device such as a television set or display panel, to external loudspeakers, etc. In this example, one of the terminals is a connection, such as a USB connection, to which a removable storage medium, such as for example a USB flash drive or memory stick 40, may be connected and on which the recorded transport stream is stored.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory. Examples described herein are particularly useful when the recording device is recording digital data to removable data storage, including in particular a USB flash drive or memory stick or the like.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. In general, aspects described herein may be applied to any digital media file that is composed of fixed-size data packets. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of recording digital transport stream packets of a transmitted transport stream, which is formed of digital transport stream packets received at a recording device, to form a recorded transport stream, the method comprising:
during the recording of the digital transport stream packets, adding a timestamp for each transmitted transport stream packet, the timestamp specifying the record duration so far, such that the recorded transport stream is formed of recorded transport stream packets and record duration timestamps for each recorded transport stream packet.

2. A method according to claim 1, wherein the number of bits for each record duration timestamp is fixed.

3. A method according to claim 1 or claim 2, wherein the number of bits for each record duration timestamp and the clock speed for determining the record duration during recording are such as to provide a total record duration in excess of 30 minutes.

4. A method according to any of claims 1 to 3, comprising:
during the recording of the digital transport stream packets, adding a padding element for each transmitted transport stream packet, such that the recorded transport stream is formed of recorded transport stream packets, record duration timestamps for each recorded transport stream packet, and padding elements for each transmitted transport stream packet.

5. A method according to claim 4, wherein the number of bits for each padding element is fixed.

6. A method according to claim 4 or claim 5, wherein the padding element for each recorded transport stream packet is the same.

7. A method according to claim 6, wherein the padding element is an identifier of the recording device.

8. A method according to claim 7, wherein the transport stream packets are encrypted during the recording by the recording device, the encryption using a public-private key pair of the recording device in which the identifier of the recording device is the public key of the recording device.

9. A method according to claim 4 or claim 5, wherein the numerical value of the padding elements for the respective recorded transport stream packets increase in sequence as the recorded transport stream packets are recorded.

10. A method of recording digital transport stream packets of a transmitted transport stream, which is formed of digital transport stream packets received at a recording device, to form a recorded transport stream, the method comprising:
during the recording of the digital transport stream packets, adding a padding element for each transmitted transport stream packet, such that the recorded transport stream is formed of recorded transport stream packets and padding elements for each transmitted transport stream packet; wherein:
the padding element for each recorded transport stream packet is the same, or
the numerical value of the padding elements for the respective recorded transport stream packets increase in sequence as the recorded transport stream packets are recorded.

11. A method according to claim 10, wherein in the case that the padding element for each recorded transport stream packet is the same, the padding element is an identifier of the recording device.

12. A method according to claim 11, wherein the transport stream packets are encrypted during the recording by the recording device, the encryption using a public-private key pair of the recording device in which the identifier of the recording device is the public key of the recording device.

13. A method of using a recorded transport stream formed according to any of claims 1 to 9, the method comprising providing an indication of the total duration of the recorded transport stream by inspecting the last record duration timestamp in the recorded transport stream and providing an indication of the total duration of the recorded transport stream on the basis of the last record duration timestamp in the recorded transport stream.

14. A method of using a recorded transport stream formed according to any of claims 1 to 9, the method comprising inspecting the record duration timestamps in the recorded transport stream to at least one of (i) identify the current playback position and (ii) locate a specific playback position during fast forwarding and/or fast rewind of the recorded transport stream.

15. A method of using a recorded transport stream formed according to any of claims 1 to 9, the method comprising inspecting the record duration timestamps in the recorded transport stream and determining that the recorded transport stream is corrupt if the value of any successive timestamp is less than for any previous timestamp.

16. A method of using a recorded transport stream formed according to any of claims 7, 8, 11 or 12, the method comprising inspecting at least one of the padding elements to obtain the identifier of the recording device on which the transport stream was recorded.

17. A method of using a recorded transport stream formed according to claim 9 or claim 10 when the numerical value of the padding elements for the respective recorded transport stream packets increase in sequence as the recorded transport stream packets are recorded, the method comprising inspecting the padding elements in the recorded transport stream and determining that the recorded transport stream is corrupt if the value of any successive padding element is less than for any previous padding element.

18. A computer program comprising instructions such that when the computer program is executed on a computing device, the computing device is arranged to carry out a method according to any of claims 1 to 17.
